# EUROPEAN PATENT SPECIFICATION

(11) **EP 1 266 809 B1**
(45) Date of publication and mention of the grant of the patent: **19.10.2005**
(21) Application number: 02012999.5
(22) Date of filing: 12.06.2002
(51) Int. Cl.: B60R 22/195

(54) **Automotive vehicle occupant protection system**
Kraftfahrzeug Insassenschutzsystem
Syteme de protection pour les occupants d'un véhicule automobile

(30) Priority: 12.06.2001 JP 2001177524
(43) Date of publication of application: 18.12.2002
(73) Proprietor: HONDA GIKEN KOGYO KABUSHIKI KAISHA, Minato-ku, Tokyo (JP)
(72) Inventor: Motozawa, Yasuki, 1-4-1 Chuo, Wako-shi, Saitama (JP)
(74) Representative: Prechtel, Jörg

(56) References cited:
- DE-A- 3 420 397
- JP-A- 2001 097 183
- US-A- 4 008 909
- US-A- 4 317 584
- US-A- 4 458 921

## Description

### TECHNICAL FIELD

The present invention relates to a vehicle occupant protection system for improving the crash safety of the vehicle.

### BACKGROUND OF THE INVENTION

Reference should be made to the following commonly assigned prior patents (copending patent applications):
US 6,193,296 B1
US 6,186,574 B1
US 6,203,098 B1
US 6,254,164 B1
EP 1072464A1
EP 1067014A1
EP 1070657A1
EP 1106479A1
EP 1203700A1

In recent years, motor vehicles have been often fitted with a pretensioner device which positively increases the tension of the seat belt for restraining the vehicle occupant at the time of a crash and improves the protection of the vehicle occupant. The deceleration acting on the vehicle occupant who is restrained to the seat by a restraint device such as a seat belt starts rising only when the forward inertia force acting on the vehicle occupant at the time of the crash has started to be supported by the seat belt. As it is not possible to eliminate a certain amount of resiliency and slack in the seat belt, the deceleration of the vehicle occupant reaches a peak level only when the vehicle occupant has moved forward a certain distance under the inertia force and the elongation of the seat belt has reached its maximum extent. The peak value of the deceleration of the vehicle occupant gets greater as the forward displacement of the vehicle occupant under the inertia force increases, and is known to be substantially larger than the average deceleration of the passenger compartment of the vehicle body.

When the relationship between the vehicle body deceleration and the vehicle occupant deceleration is compared to the relationship between the input and output of a system consisting of a spring (vehicle occupant restraint device) and a mass (mass of the vehicle occupant), it can be readily understood that the maximum elongation and time history of the spring are dictated by the waveform (time history) of the vehicle body deceleration. Therefore, it can be concluded that the waveform of the vehicle body deceleration should be controlled in such a manner that not only the average deceleration acting on the vehicle body is reduced but also the overshoot of the vehicle occupant deceleration due to the elongation of the spring (vehicle occupant restraint device) is minimized.

In the conventional vehicle body structure, the impact energy is absorbed by a crushable zone, consisting of an impact reaction generating member such as side beams and gaps defined between various components, provided in a front part of the vehicle body, and the waveform of the vehicle body deceleration is adjusted by changing the resulting reaction properties by means of the selection of the dimensions and deformation properties of such parts. The deformation mode of the vehicle body other than the passenger compartment at the time of a crash may also be appropriately selected so that the deceleration of the passenger compartment of the vehicle body may be reduced, and the deformation may be prevented from reaching the passenger compartment. Such vehicle body structures are proposed in Japanese patent laid open publication (kokai) No. 07-101354.

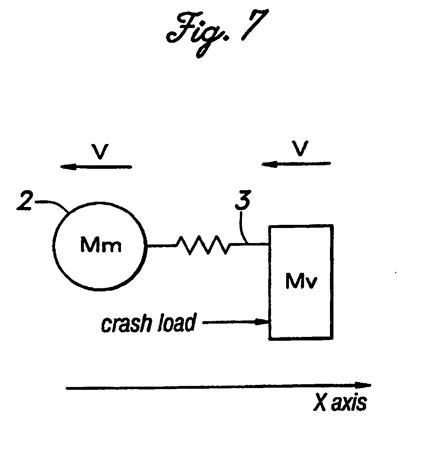

It is important to note that the injury to the vehicle occupant at the time of a vehicle crash can be minimized by reducing the maximum value of the acceleration (deceleration) acting on the vehicle occupant which is dictated by the waveform (time history) of the vehicle body deceleration when the vehicle occupant is held integral with the vehicle body by the seat belt. It is also important to note that the total amount of deceleration (time integration of deceleration) which the vehicle occupant experiences during a vehicle crash is fixed for the given intensity of crash. Therefore, as shown in Figure 6 for instance, the ideal waveform (time history) of the vehicle body (seat) deceleration (G2) for the minimization of the vehicle occupant deceleration (G1) should consist of an initial interval (a) for producing a large deceleration upon detection of a crash, an intermediate interval (b) for producing an opposite deceleration, and a final interval (c) for producing an average deceleration.

The initial interval allows the vehicle occupant to experience the deceleration from an early stage so that the deceleration may be spread over an extended period of time, and the peak value of the deceleration to be reduced. According to a normal vehicle body structure, owing to the presence of a crushable zone in a front part of the vehicle and a slack and elongation of the restraint system such as a seat belt, it takes a certain amount of time for the impact of a crash to reach the vehicle occupant. The delay in the transmission of deceleration to the vehicle occupant must be made up for by a subsequent sharp rise in deceleration according to the conventional arrangement. The final interval corresponds to a state called a ride-down state in which the vehicle occupant moves with the vehicle body as a single body. The intermediate interval is a transitional interval for smoothly connecting the initial interval and final interval without involving any peak or dip in the deceleration. Computer simulations have verified that such a waveform for the vehicle body deceleration results in a smaller vehicle occupant deceleration than the case of a constant deceleration (rectangular waveform) for a given amount of deformation of the vehicle body (dynamic stroke).

According to the conventional vehicle body structure, the vehicle body components of the crushable zone start deforming from a part having a relatively small mechanical strength immediately after the crash, and a part thereof having a relatively high mechanical strength starts deforming thereafter. As a result, the waveform of the crash reaction or the vehicle body deceleration is small in an early phase, and then gets greater in a later phase so that the vehicle occupant deceleration cannot be adequately reduced. To eliminate such a problem, it has been proposed to obtain a prescribed amount of reaction force by making use of the collapsing of the side beams and to maintain a stable reaction by providing a plurality of partition walls in the side beams (Japanese patent laid-open publication (kokai) No. 07-101354). However, such previous proposals can only maintain the vehicle body deceleration at an approximately constant level at most, and are unable to provide a more effective deceleration waveform.

To minimize the adverse effect of the resiliency of the seat belt, it is known to provide a pretensioner device in association with the seat belt to positively tension the seat belt at the time of a vehicle crash. An automotive vehicle occupant protection system according to the preamble of claim 1 is known from DE 3420397 A. According to proposed structure, at least one of the anchor points of the seat belt is attached to a member which undergoes a movement relative to the remaining part of the vehicle which tends to increase the tension of the seat belt in an early phase of a vehicle crash. Such devices are beneficial in reducing the maximum level of deceleration acting on the vehicle occupant at the time of a vehicle crash, but a device capable of more precise control of the vehicle occupant deceleration is desired.

Referring to Figure 7, the vehicle occupant deceleration G1 and vehicle body deceleration G2 correspond to the input and output of a transfer function representing a two-mass spring-mass system consisting of the mass Mm of a vehicle occupant 2, a spring (such as a seat belt), and a vehicle body mass Mv. More specifically, the vehicle body deceleration G2 can be given as a second-order differentiation of the coordinate of the vehicle body mass Mv with respect to time.

However, in an actual automotive crash, if a three-point seat belt is used, the shoulder belt portion of the seat belt which can be considered as a spring engages the chest of the vehicle occupant corresponding to the center of the vehicle occupant mass Mm so that the shoulder belt portion can be considered as consisting of two springs, one extending between the chest and shoulder anchor, the other extending between the chest and the buckle anchor.

If the seat belt is entirely incorporated to the seat, the shoulder anchor and buckle anchor move as a single body, and the two parts experience an identical deceleration. In such a case, it can be assumed that the seat belt can be given as a composite of two springs, and the deceleration acting on the shoulder anchor and buckle anchor is identical to the input to the two-mass spring-mass system or the vehicle body deceleration.

Now, suppose if the buckle anchor point is fixedly attached to the vehicle body while the shoulder anchor is capable of movement relative to the vehicle body as an example in which the two anchor points undergo different movements relative to the vehicle body. In such a case, because the shoulder anchor and buckle anchor experience different decelerations, the springs cannot be simply combined or the decelerations acting on the shoulder anchor and buckle anchor cannot be simply equated to the vehicle body deceleration.

Meanwhile, the external force acting on the chest wholly consists of the force received from the seat belt. Therefore, if the time history of the load acting on the seat belt in the direction of deceleration agrees with the time history of the spring load in the two-mass spring-mass system, the chest receives the same deceleration waveform as the response of the vehicle occupant mass of the two-mass spring-mass system to the optimum waveform of vehicle body deceleration. This enables the vehicle occupant to reach the ride-down state in which the vehicle occupant is restrained by the seat belt substantially without any delay and the relative speed between the vehicle body and vehicle occupant is zero (no difference between the vehicle occupant deceleration G1 and vehicle body deceleration G2).

To achieve a time history of the seat belt that produces such a state, it suffices if the time history of the average deceleration of the shoulder anchor and buckle anchor (or vehicle body) is equal to the optimum waveform of the vehicle body deceleration. Introducing the concept of the waveform of average vehicle body deceleration allows an identical result in reducing the vehicle occupant deceleration as controlling the vehicle body deceleration so as to achieve the optimum waveform to be achieved.

The early rise in the tension of the seat belt to apply the deceleration to the vehicle occupant from an early stage can be most conveniently provided by a pyrotechnical actuator typically using a propellant. Pyrotechnical actuators are widely known in such applications as vehicle air bags and pretensioners. However, it was found due to the nature of its structure which relies on the generation of high pressure gas that such an actuator alone may not be able to produce a desired time history of the deceleration of the vehicle occupant. The inventors have discovered that such a problem can be overcome by adding a suitable amount of mass to the actuator end of the seat belt in combination with a cushioning member.

### BRIEF SUMMARY OF THE INVENTION

In view of such problems of the prior art, a primary object of the present invention is to provide a vehicle occupant protection system which can improve the protection of the vehicle occupant at the time of a vehicle crash for a given dynamic stroke or a deformation stroke of a front part of the vehicle body.

A second object of the present invention is to provide a vehicle occupant protection system which can maximize the protection of the vehicle occupant with a minimum modification to the existing vehicle body structure.

A third object of the present invention is to provide a vehicle occupant protection system which can maximize the protection of the vehicle occupant without increasing the weight of the vehicle body or taking up any significant amount of space in the passenger compartment.

According to the present invention, such objects can be accomplished by providing an automotive vehicle occupant protection system as defined and characterised by the features of claim 1.

Thus, upon detection of a crash, the main actuator which typically consists of a pyrotechnic actuator increases the restraint of the seat belt by moving the moveable end of the seat belt so that a deceleration greater than the average deceleration (vehicle deceleration) is produced in the vehicle occupant. Then, after the moveable part has moved by a prescribed distance, the movement is prevented by the cushioning member and an opposite deceleration is produced in the vehicle occupant so that the vehicle occupant and vehicle body move as a single body in a final phase of the crash, and decelerate at the average deceleration. This achieves a waveform of vehicle body deceleration suitable for the minimization of the deceleration of the vehicle occupant. The anchor points may be provided in the seat, but all or some of them may be provided on other parts of the vehicle body. According to a preferred embodiment of the present invention, to obtain a highly predictable result, the seat belt may comprise three anchor points including a shoulder anchor, a seat bottom side anchor provided near a seat bottom on a same side as the shoulder anchor, and a buckle anchor provided near the seat bottom on an opposite side of the shoulder anchor.

Typically, the actuator comprises a guide rail for guiding the mass member along a prescribed path, and the guide rail extends linearly along a side of the seat. For a reliable operation of the vehicle occupant protection system, the actuator should be provided with a member for preventing a reversing movement of the actuator.

### BRIEF DESCRIPTION OF THE DRAWINGS

Now the present invention is described in the following with reference to the appended drawings, in which:
Figure 1 is a schematic side view of the outline of the vehicle body structure fitted with a vehicle occupant protection system embodying the present invention.;
Figure 2 is an overall perspective view of the seat;
Figure 3a is a vertical sectional view showing the structure of the actuator;
Figure 3b is a sectional view taken along line IIIb-IIIb of Figure 3a;
Figure 4a is a schematic view of the vehicle body in an initial phase of the crash;
Figure 4b is a view showing an intermediate phase of the crash;
Figure 4c is a view showing a final phase of the crash;
Figure 5a is a schematic view showing the state of the actuator in an initial phase of the crash;
Figure 5b is a view showing the state in an intermediate phase of the crash;
Figure 5c is a view showing the state in a final phase of the crash;
Figure 6 is a diagram showing the waveforms of the vehicle occupant deceleration and vehicle body deceleration; and
Figure 7 is a conceptual diagram showing the relationship between the vehicle occupant, vehicle body and seat belt at the time of a vehicle crash.

### DETAILED DESCRIPTION OF THE PREFERRED EMBODIMENTS

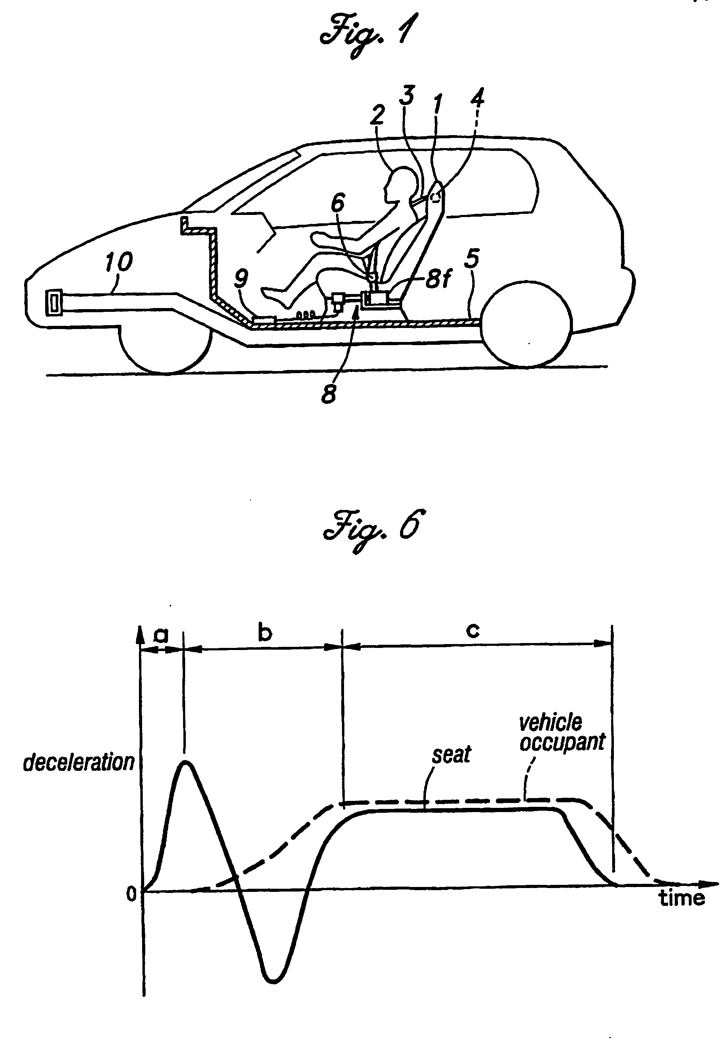

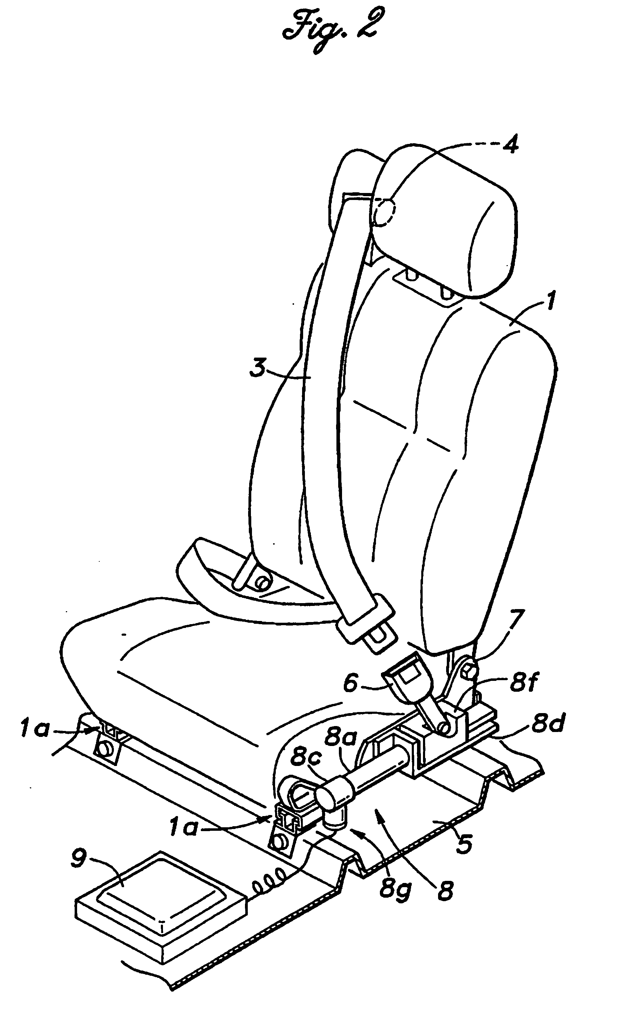

Figure 1 schematically illustrates the overall structure of a vehicle incorporated with a vehicle occupant protection system embodying the present invention. The vehicle occupant protection system includes a seat belt 3 for restraining the vehicle occupant 2 to the seat 1. As shown in Figure 2 also, the seat belt 3 has three anchor points, and an end of the seat belt is connected to a retractor 4 integrally provided in a shoulder part of the seat 1, another end fixedly attached to a side of the seat bottom on the same side as the shoulder anchor, and an intermediate part connected to a buckle 6 integrally attached to the side of the seat bottom on the other side of the shoulder anchor. Therefore, the vehicle occupant 2 who is seated in the seat 1 is integrally restrained to the seat 1 by the seat belt 3. The seat 1 is attached to a floor 5 via seat rails 1 so as to be adjustable in the fore-and-aft direction.

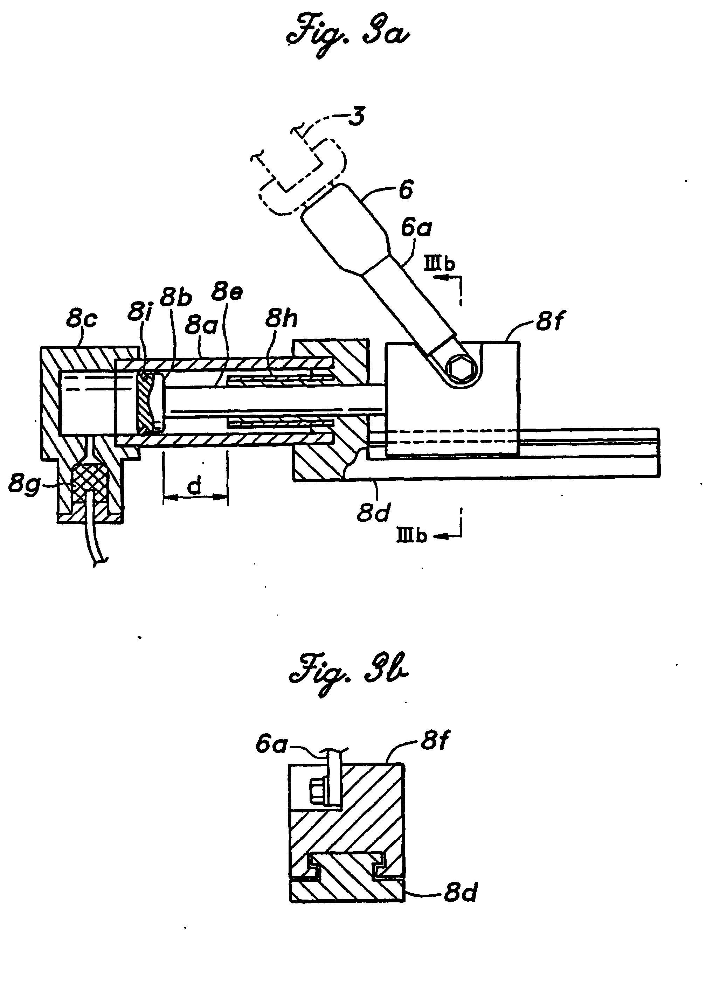

To the seat 1 is integrally attached an actuator 8 via a bracket 7 which is fixedly secured to a side of the seat bottom corresponding to the buckle 6. As also shown in Figure 3a, the actuator 8 comprises a cylinder 8a extending in the fore-and-aft direction, a piston 8b coaxially received in the cylinder 8a, a cylinder cap 8c integrally attached to an end (forward end with respect to the vehicle body) of the cylinder 8a, and a slide rail 8d supporting the other end (rear end with respect to the vehicle body) of the cylinder 8a and integrally connected to the bracket 7 so as to extend in the rearward direction with respect to the vehicle body.

The actuator 8 further comprises a buckle support member 8f in the form of a block serving as a mass member which is slidably engaged by the slide rail 8d and connected to an extension of a rod 8e formed integrally with the piston 8b, a gas generator 8g facing a chamber defined inside the cylinder cap 8c, and a tubular cushioning member 8h having an axial end supported by a part of the slide rail 8d facing the interior of the cylinder 8a and externally surrounding the rod 8e. The forward end of the cushioning member 8h with respect to the vehicle body opposes the piston 8b defining a gap of a prescribed dimension d therebetween. The buckle support member 8f is for instance made of tungsten alloy and provided with a mass corresponding in extent to that of the vehicle occupant.

The outer circumferential surface of the piston 8b is provided with a reversing preventing ring 8i which allows the rearward movement of the piston 8b by inclining itself to one side but prevents the forward movement of the piston 8b by wedging into the inner circumferential surface of the cylinder 8a.

The buckle support member 8f and slide rail 8d engage each other via a groove or flange for limiting the movement of the buckle support member 8f other than that along the length of the guide rail 8d. A base end of a leg portion 6a of the buckle 6 is connected to the buckle support member 8f via a threaded bolt.

To the gas generator 8g is connected a signal line from a control unit 9 mounted to an appropriate part (such as the floor 5) of the vehicle body and incorporated with a crash sensor which, for instance, may consist of a G sensor. The crash sensor provides a crash detecting signal to the gas generator 8g when a crash meeting a prescribed condition is detected. In response to a crash detecting signal, the gas generator 8g instantaneously produces expanding gas which is then introduced into the cylinder cap 8c.

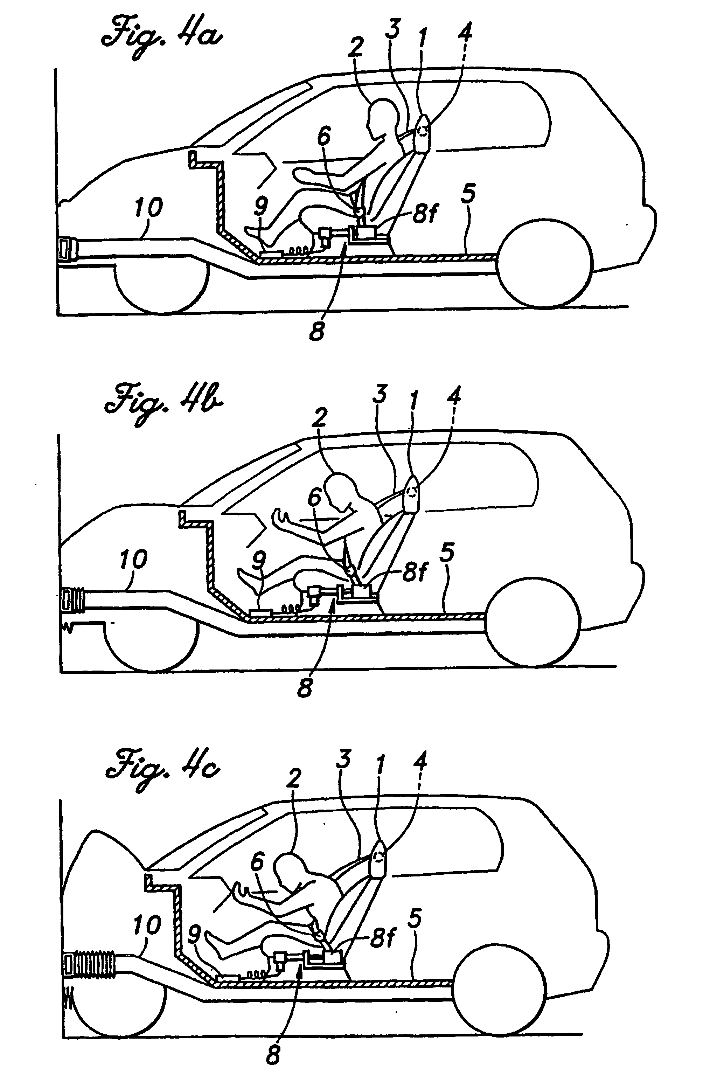

Referring to Figures 4a to 4c and 5a to 5c, the mode of operation of the embodiment of the present invention is described in the following by taking an example of a frontal crash onto a fixed structure.

Figure 4a shows a state of an initial phase (interval a of Figure 6) immediately following the occurrence of a crash. The front end of the vehicle body collapses, and the front ends of side beams 10 integral with the floor 5 undergo a compressive deformation as shown in the drawing. The crash sensor incorporated in the control unit 9 detects the vehicle body deceleration resulting from the vehicle crash exceeding a prescribed intensity, and the control unit 9 judges the condition that is produced. If the control unit 9 judges that the condition meets the prescribed criterion, the gas generator 8g is activated.

The expanding gas produced from the gas generator 8g is introduced into the cylinder cap 8c as indicated by the arrow in Figure 5a, and the pressure of the expanding gas pushes the piston 8b in the rearward direction with respect to the vehicle body. As a result, the buckle support member 8f which is connected to the piston 8b via the rod 8e starts moving rearward with respect to the vehicle body, guided by the slide rail 8d, and accelerates rearward as the generated gas pressure increases. Because the buckle support member 8f is directed such that the buckle 6 which is one of the three anchor points of the seat belt 3 is moved rearward, the seat belt 3 is moved in the direction to remove a slack of the seat belt 3, elongate the seat belt 3 and increase the restraint acting on the vehicle occupant 2. Thus, the seat belt 3 is subjected to a load which increases the restraining force of the seat belt 3.

The resulting rise in the seat belt load is earlier than that provided by a seat belt which is simply secured at three anchor points in restraining the vehicle occupant from being thrown forward under the inertia force. Therefore, the deceleration of the vehicle occupant is made to rise from a very early part of the crash as indicated by G1 in Figure 6.

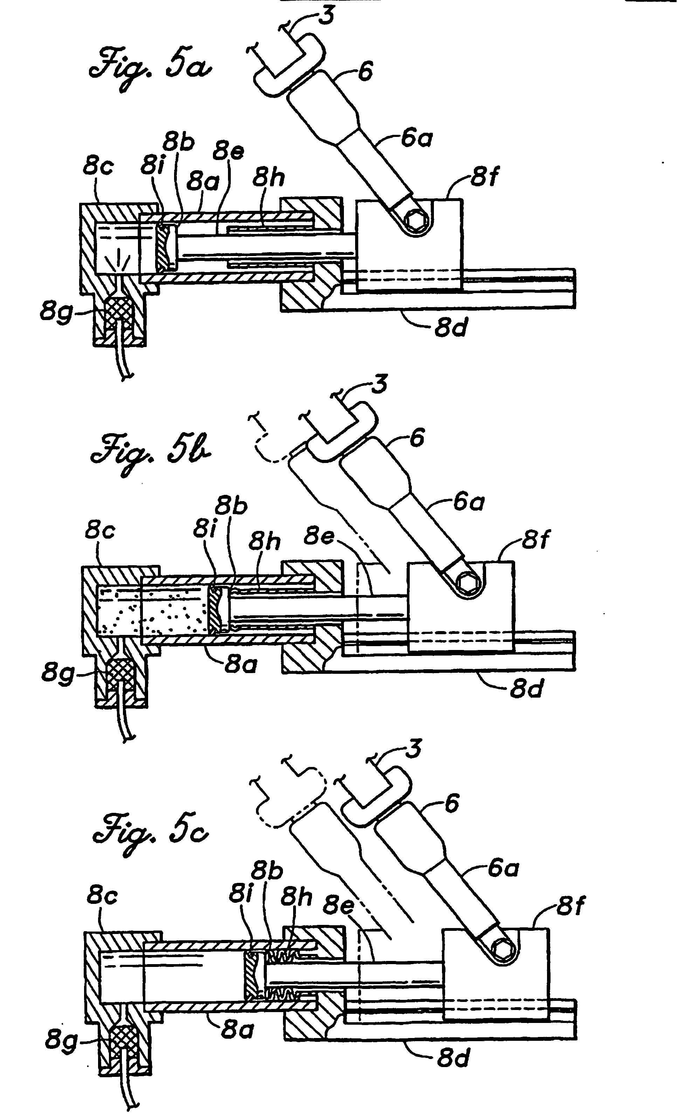

Figure 4b shows a state in an intermediate phase of the crash (interval b of Figure 6). As the collapsing of the front part of the vehicle body progresses, the piston 8b of the actuator 8 moves further rearward with respect to the vehicle body as indicated in Figure 5b. As the piston 8b moves further rearward, the piston 8b eventually collides with the cushioning member 8h, and this decelerates the rearward movement of the buckle support member 8f, thereby producing an opposite (forward with respect to the vehicle body) acceleration. This produces an effect equivalent to that produced by an acceleration directed in the opposite direction to the deceleration resulting directly from the crash acting on the passenger compartment. To better achieve such an effect by applying a mass corresponding to that of the vehicle occupant to an anchor point of the seat belt, the mass of the buckle support member 8f and the acceleration at the time of colliding with the cushioning member 8h are appropriately adjusted. It is preferable to design the properties (such as elongation and spring properties) of the seat belt 3 and the properties (such as impact absorbing property) of the cushioning member 8h so that the speed and deceleration of the vehicle occupant 2 coincide with those of the vehicle body (seat 1) upon completion of the acceleration in the opposite direction acting on the buckle support member 8f during this intermediate phase.

Figure 4c shows a state of a final phase (interval c of Figure 6) of the crash. During the final phase, the rearward movement of the buckle support member 8f is further decelerated by the cushioning member 8h, and the piston 8b eventually comes to a complete stop. As a result, the buckle support member 8f also stops moving rearward, and is retained at this position until the end of the vehicle crash by virtue of a reversing preventing ring 8i.

During this final phase, once the speed and deceleration of the vehicle occupant agree with those of the vehicle body (seat 1), there is no relative movement between the vehicle occupant 2 and vehicle body (seat 1), and the vehicle occupant 2 continues to decelerate as a single body with the vehicle body (seat 1). In other words, the maximum value of the vehicle occupant deceleration G1 can be reduced by achieving a ride down state in which the relative speed between the vehicle occupant 2 and vehicle body (seat 1) is minimized and the difference between the vehicle occupant deceleration G1 and vehicle body deceleration G2 is minimized.

Thus, the process described above can substantially reduce the vehicle occupant deceleration by controlling the deceleration produced in the buckle support member 8f so as to follow the optimum deceleration waveform or by designing the actuator 8 so as to produce the optimum deceleration waveform.

Thus, according to the foregoing embodiment, upon detection of a crash, the main part of the actuator consisting of a pyrotechnical actuator increases the restraint of the seat belt by moving the moveable part provided on the seat serving as a part of the vehicle body so that the vehicle occupant and vehicle body start moving as a single body and a deceleration greater than the average deceleration (vehicle deceleration) is produced in the moveable part. Then, after the moveable part has moved by a prescribed distance, the movement is prevented by the cushioning member and an opposite deceleration is produced in the moveable part so that the vehicle occupant and vehicle body move as a single body in a final phase of the crash, and decelerate at the average deceleration. This achieves a waveform of vehicle body deceleration suitable for the minimization of the deceleration of the vehicle occupant. As a result, not only a substantial reduction in the vehicle occupant deceleration can be achieved with a smaller vehicle body deformation (dynamic stroke) but also the displacement of the vehicle occupant in the passenger compartment relative to the vehicle body can be reduced even more than possible by providing a load limiter in the restraining device to reduce the vehicle body deceleration. The smaller displacement of the vehicle occupant reduces the possibility of a secondary collision.

When an end of the seat belt is attached to the seat, and an intermediate part of the seat belt is attached to the moveable part via a buckle, the vehicle occupant and seat can be joined integrally to each other by using a conventional three-point seat belt incorporated to a seat so that the cost of the system can be minimized without requiring any substantial change to the existing system.

Although the present invention has been described in terms of a preferred embodiment thereof, it is obvious to a person skilled in the art that various alterations and modifications are possible without departing from the scope of the present invention which is set forth in the appended claims. For instance, all or some of the anchor points may be provided on parts of the vehicle body other than those on the seat. The actuator also may consist of actuator other than pyrotechnic actuators such as spring loaded actuators.

An end of a seat belt (3) is connected to a part of the vehicle body via an actuator (8) that can selectively remove a slack from the seat belt. The actuator includes a mass member (8f) attached to said moveable end of said seat belt, a main actuator unit (8g, 8i) adapted to move said mass member in a direction to remove a slack from said seat belt immediately upon detection of a frontal vehicle crash, and a cushioning member for decelerating a movement of said mass member following a certain initial travel of said mass member. The main actuator produces an early rise in the vehicle occupant deceleration, and the cushioning member (8h) smoothly connects the time history of the vehicle occupant deceleration to a ride-down condition whereby the deceleration acting on the vehicle occupant is favorably spread over time, and the maximum level of the deceleration can be minimized. The mass member contributes to a favorable shaping of the time history of the vehicle occupant deceleration.

## Claims

1. An automotive vehicle occupant protection system, comprising:
a seat (1) supported on a floor (5) of a vehicle body;
a seat belt (3) provided in association with said seat and including a moveable end;
an actuator (8) connecting said moveable end of said seat belt to a part of said vehicle body to selectively remove a slack from said seat belt; and
a control unit (9) including a detection sensor for detecting a frontal vehicle crash meeting a prescribed condition;
said actuator including a mass member (8f) attached to said moveable end of said seat belt and a main actuator unit (8g, 8i) adapted to move said mass member in a direction to remove a slack from said seat belt immediately upon detection of a frontal vehicle crash,
**characterized in that** a cushioning member (8h) is provided for decelerating a movement of said mass member following a certain initial travel of said mass member and that said mass member (8f) has a mass corresponding in extent to that of a vehicle occupant.

2. An automotive vehicle occupant protection system according to claim 1, wherein said actuator connects said moveable end of said seat belt to a part of said seat.

3. An automotive vehicle occupant protection system according to claim 1, wherein said seat belt comprises three anchor points including a shoulder anchor, a seat bottom side anchor provided near a seat bottom on a same side as said shoulder anchor, and a buckle anchor provided near said seat bottom on an opposite side of said shoulder anchor.

4. An automotive vehicle occupant protection system according to claim 3, wherein all or part of said anchors are attached to corresponding parts of said seat.

5. An automotive vehicle occupant protection system according to claim 1, wherein said actuator comprises a guide rail (8d) for guiding said mass member along a prescribed path.

6. An automotive vehicle occupant protection system according to claim 5, wherein said guide rail extends linearly along a side of said seat.

7. An automotive vehicle occupant protection system according to claim 1, wherein said actuator is provided with a member (8i) for preventing a reversing movement of said actuator.

8. An automotive vehicle occupant protection system according to claim 1, wherein said main actuator unit comprises a pyrotechnic actuator.

## Patentansprüche

1. Kraftfahrzeuginsassenschutrsystem, umfassend
einen Sitz (1), welcher an einem Boden (5) einer Fahrzeugkarosserie getragen ist;
einen Sitzgurt (3), welcher in Zuordnung zu dem Sitz vorgesehen ist und ein bewegliches Ende enthält;
einen Aktuator (8), welcher das bewegliche Ende des Sitzgurts mit einem Teil der Fahrzeugkarosserie verbindet, um wahlweise Lose von dem Sitzgurt zu entfernen; und
eine Steuer-/Regeleinheit (9), welche einen Erfassungssensor zum Erfassen eines eine vorbestimmte Bedingung erfüllenden frontalen Fahrzeugaufpralls enthält;
wobei der Aktuator ein Masseelement (8f) enthält, welches an dem beweglichen Ende des Sitzgurts angebracht ist, und eine Hauptaktuatoreinheit (8g, 8i) enthält, welche dafür ausgelegt ist, das Masseelement in eine solche Richtung zu bewegen, dass unmittelbar auf die Erfassung eines frontalen Fahrzeugaufpralls hin Lose aus dem Sitzgurt entfernt wird,
**dadurch gekennzeichnet, dass** ein Dämpfungselement (8h) vorgesehen ist, um eine Bewegung des Masseelements nach einer bestimmten Anfangsbewegung des Masseelements zu verzögern, und dass das Masseelement (8f) eine Masse aufweist, welche in ihrer Größe der eines Fahrzeuginsassen entspricht.

2. Kraftfahrzeuginsassenschutzsystem nach Anspruch 1, in welchem der Aktuator das bewegliche Ende des Sitzgurts mit einem Teil des Sitzes verbindet.

3. Kraftfahrzeuginsassenschutzsystem nach Anspruch 1, in welchem der Sitzgurt drei Verankerungspunkte umfasst, einschließlich einer Schulterverankerung, einer Sitzbodenseitenverankerung, welche nahe einem Sitzboden auf der gleichen Seite wie die Schulterverankerung vorgesehen ist, und einer Gurtschlossverankerung, welche nahe dem Sitzboden auf einer der Schulterverankerung gegenüberliegenden Seite vorgesehen ist.

4. Kraftfahrzeuginsassenschutzsystem nach Anspruch 3,
in welchem alle oder ein Teil der Verankerungen an zugeordneten Teilen des Sitzes angebracht sind.

5. Kraftfahrzeuginsassenschutzsystem nach Anspruch 1,
in welchem der Aktuator eine Führungsschiene (8d) zum Führen des Masseelements entlang einem vorbestimmten Weg umfasst.

6. Kraftfahrzeuginsassenschutzsystem nach Anspruch 5,
in welchem die Führungsschiene sich linear entlang einer Seite des Sitzes erstreckt.

7. Kraftfahrzeuginsassenschutzsystem nach Anspruch 1,
in welchem der Aktuator mit einem Element (8i) zum Verhindern einer Rückwärtsbewegung des Aktuators versehen ist.

8. Kraftfahrzeuginsassenschutzsystem nach Anspruch 1,
in welchem die Hauptaktuatoreinheit einen pyrotechnischen Aktuator umfasst.

## Revendications

1. Système de protection pour un occupant d'un véhicule automobile, comprenant :
un siège (1) reposant sur un plancher (5) d'une caisse de véhicule ;
une ceinture de sécurité (3) fournie en association avec ledit siège et comprenant une extrémité mobile ;
un mécanisme d'actionnement (8) reliant ladite extrémité mobile de ladite ceinture de sécurité à une partie de ladite caisse de véhicule pour tendre de manière sélective ladite ceinture de sécurité ; et
une unité de commande (9) comprenant un capteur de détection pour détecter un choc frontal du véhicule satisfaisant une condition prédéterminée ;
ledit mécanisme d'actionnement comprenant un élément massique (8f) fixé à ladite extrémité mobile de ladite ceinture de sécurité et une unité principale d'actionnement (8g, 8i) appropriée pour déplacer ledit élément massique dans un sens pour tendre ladite ceinture de sécurité immédiatement lors de la détection d'un choc frontal du véhicule, **caractérisé en ce qu'**un élément d'amortissement (8h) est fourni pour ralentir un déplacement dudit élément massique après un certain déplacement initial dudit élément massique et **en ce que** ledit élément massique (8f) a une masse correspondant globalement à celle d'un occupant du véhicule.

2. Système de protection pour un occupant d'un véhicule automobile selon la revendication 1, dans lequel ledit mécanisme d'actionnement relie ladite extrémité mobile de ladite ceinture de sécurité à une partie dudit siège.

3. Système de protection pour un occupant d'un véhicule automobile selon la revendication 1, dans lequel ladite ceinture de sécurité comprend trois points d'ancrage dont un ancrage au niveau de l'épaule, un ancrage latéral au bas du siège disposé près du bas d'un siège du même côté que ledit ancrage au niveau de l'épaule et un ancrage de bouclage disposé près dudit bas du siège sur le côté opposé dudit ancrage au niveau de l'épaule.

4. Système de protection pour un occupant d'un véhicule automobile selon la revendication 3, dans lequel tout ou partie desdits ancrages sont fixés aux parties correspondantes dudit siège.

5. Système de protection pour un occupant d'un véhicule automobile selon la revendication 1, dans lequel ledit mécanisme d'actionnement comprend un rail de guidage (8d) pour guider ledit élément massique le long d'une trajectoire prédéterminée.

6. Système de protection pour un occupant d'un véhicule automobile selon la revendication 5, dans lequel ledit rail de guidage s'étend linéairement le long d'un côté dudit siège.

7. Système de protection pour un occupant d'un véhicule automobile selon la revendication 1, dans lequel ledit mécanisme d'actionnement comprend un élément (8i) pour empêcher un déplacement inverse dudit mécanisme d'actionnement.

8. Système de protection pour un occupant d'un véhicule automobile selon la revendication 1, dans lequel ladite unité principale d'actionnement comprend un mécanisme d'actionnement pyrotechnique.
